# EUROPEAN PATENT SPECIFICATION

(11) **EP 3 912 887 B1**
(45) Date of publication and mention of the grant of the patent: **28.02.2024**
(21) Application number: 21174504.7
(22) Date of filing: 18.05.2021
(51) Int. Cl.: B62D 15/02

(54) **IMPROVED WHEEL ANGLE SENSOR ASSEMBLY**
VERBESSERTE RADWINKELSENSORANORDNUNG
ENSEMBLE CAPTEUR D'ANGLE DE ROUE AMÉLIORÉ

(30) Priority: 19.05.2020 IT 202000011581
(43) Date of publication of application: 24.11.2021
(73) Proprietor: CNH Industrial Italia S.p.A., 10156 Torino (IT)
(72) Inventor: HUBER, Karl, 4100 Ottensheim (AT); PIROLA, Carlo Giovanni, 4020 Linz (AT)
(74) Representative: CNH Industrial IP Department

(56) References cited:
- DE-T2- 69 818 459
- US-A1- 2020 070 885

## Description

### TECHNICAL FIELD

The present invention concerns a wheel angle sensor assembly, in particular a wheel angle sensor assembly for work vehicles such as agricultural vehicle.

### BACKGROUND OF THE INVENTION

Work vehicles such as agricultural vehicles are more and more automatized in order to substitute manual work of the operators.

An example of such automatized operation is the so-called "auto-guidance" modality. Into such modality of operation, work vehicle is controlled via GPS positioning in order to run into a predefined path. Accordingly, on the base of GPS position, the control unit of the vehicle controls actuators for varying the angle/direction of motion of the vehicle.

In view of the foregoing, it is clear that the wheel angle is a crucial measure and requires a high level of precision. Some examples can be found in DE69818459T2, which discloses the features of the preamble of the independent claim, and US2020/070885A1.

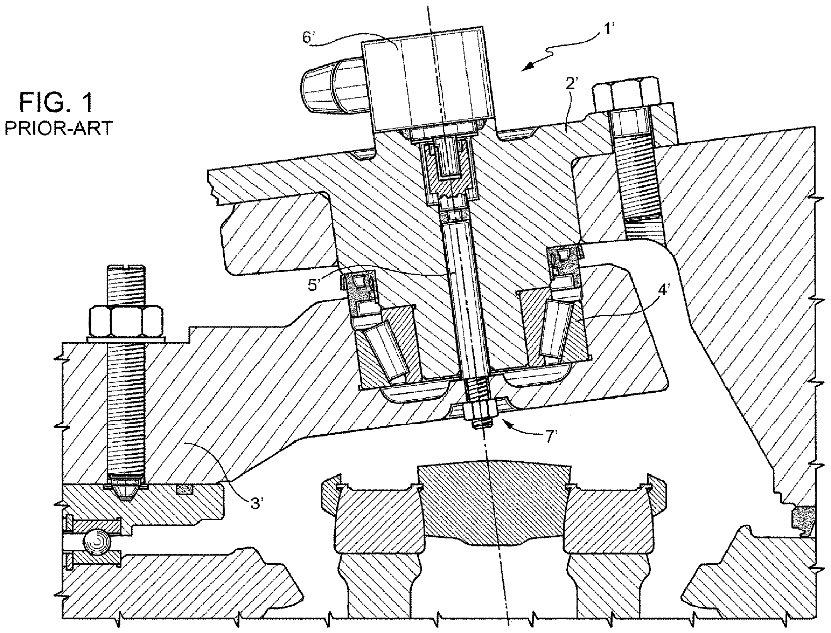

According to the present state of the art, disclosed in figure 1, an angle sensor assembly 1' is provided between a knuckle 2' and a front axle 3'.

The knuckle 2' is carried in a rotatably free manner by the front axle 3', e.g. by roller bearings 4'. Angle sensor assembly 1' comprises a pin 5', carried by front axle 3' and an angle sensor 6' carried by the knuckle 2'. Angle sensor 6' is configured to detect the relative rotation of pin 5' with respect to angle sensor 6' itself and to communicate such value to a vehicle control unit.

Thus, it is clear that the angular phase positioning between pin 5' and angle sensor 6' is an essential issue. According to the state of the art, pin 5' is inserted into knuckle 2', phased with respect to front axle 3' thanks to a designed hand tool and then fixed with respect to front axle 3'. The fixation is generally made thanks to a threaded coupling 7' achieved by a terminal threaded portion of pin 5' and a nut configured to screw onto this latter portion and thereby fixing the pin 5' to front axle 3'.

In view of the above, it is clear that the manual measure and fixation obviously can lead to imprecisions that make an erroneous phasing between pin 5' and angle sensor 6'.

Furthermore, the hand tool tends to wear use by use and therefore it may pose pin 5' incorrectly on the base of such wear.

Moreover, it is clear from drawings that the threaded coupling 7' thanks to nut into a terminal threaded portion of the pin 5' is uncomfortable. Furthermore, such mounting must be realized preliminarily on steering assemblies of work vehicles. Accordingly, the manufacturing of a steering assembly comprising a wheel angle sensor assembly 1' according to the prior art is costly and complex.

Therefore, the need is felt to provide a fixation of an angle sensor assembly that is simpler, faster and more economic with respect to the one known in the art.

An aim of the present invention is to satisfy the above mentioned needs in an optimized and cost-effective way.

### SUMMARY OF THE INVENTION

The aforementioned aim is reached by an angle assembly for a work vehicle as claimed in the appended set of claims.

Dependent claims set out particular embodiments of the invention.

### BRIEF DESCRIPTION OF DRAWINGS

For a better understanding of the present invention, a preferred embodiment is described in the following, by way of a non-limiting example, with reference to the attached drawings wherein:
- Figure 1 is a cross-sectional view of a portion of a work vehicle comprising an angle sensor assembly as known in the prior art;
- Figure 2 is a cross-sectional view of a portion of a work vehicle comprising an angle sensor assembly according to the invention;
- Figure 3 is an exploded perspective view, in an enlarged scale, of a detail of the portion of Figure 2
- Figures 4 and 5 are cross-sectional views showing respective steps for installing the angle sensor assembly according to the invention.

### DETAILED DESCRIPTION OF THE INVENTION

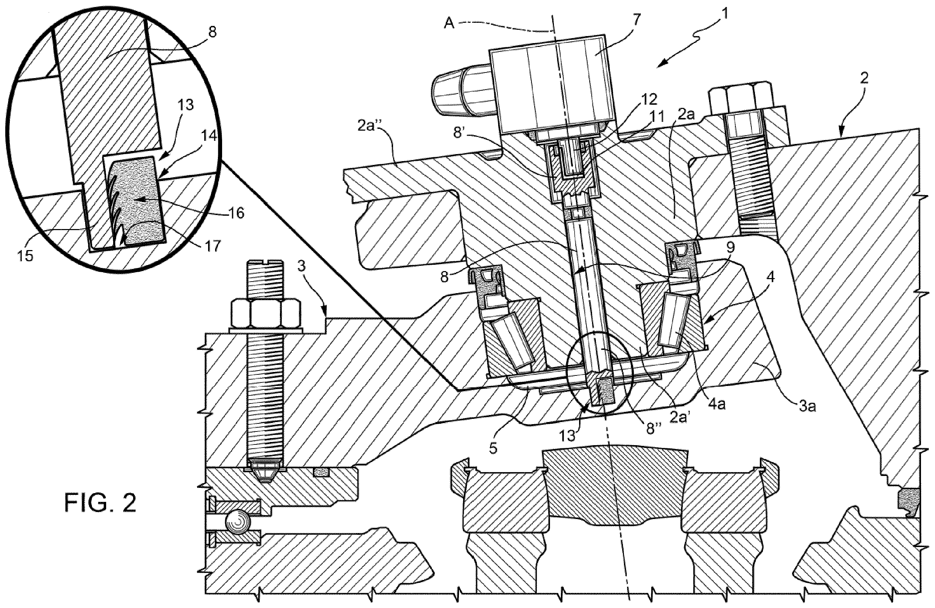

Figure 2 discloses a portion of a steering assembly of work vehicle (not shown in its entirety) comprising a wheel angle sensor assembly 1 according to the invention, interposed between a knuckle 2 and a front axle portion 3.

With detail, the knuckle 2 is carried in a rotatably free manner by front axle portion 3 by means of a support member 4, for example comprising roller bearings 4a.

In particular, roller bearings 4a are housed in a receptacle 5, which is defined by a cup-shaped portion 3a of front axle portion 3.

In the embodiment shown, the knuckle 2 comprises an axisymmetric portion 2a carried by roller bearings 4a. The axisymmetric portion 2a has a substantial cylindrical shape comprising a lower part 2a', which engages with support member 4, and an upper part 2a'' opposite with respect to lower part 2a' .

Furthermore, the axisymmetric portion 2a defines a through hole 9 from upper part 2a'' to lower part 2a' of the cylindrical shape.

Wheel angle sensor assembly 1 comprises an angle sensor 7 and a steering pin 8 extending along an axis A.

Preferably, angle sensor 7 is carried by knuckle 2 in such a manner to be coupled at rotation with this latter. On the other hand, steering pin 8 is carried by front axle portion 3 in such a manner to be coupled at rotation therewith.

Specifically, steering pin 8 and angle sensor 7 are respectively housed inside hole 9 and axisymmetric portion 2a to close hole 9 from the side of upper part 2a".

Steering pin 8 comprises an upper portion 8' adapted to cooperate with angle sensor 7 by means of a slot 11 obtained in a terminal part of upper portion 8' and arranged to cooperate with a related protrusion 12 carried by angle sensor 7, such that a rotation of steering pin 8 causes the protrusion 12 to rotate and the angle sensor 7 to sense the rotation.

Steering pin 8 further comprises a lower portion 8" defining a mechanical shape coupling 13 with front axle portion 3, preferably at the cup-shaped portion 3a.

The mechanical shape coupling 13 occurs by interference between a protrusion 15 extending from steering pin 8 and a resilient element 16 seated within a groove 14, which is defined by front axle 3.

The resilient element 16 makes part of the wheel angle sensor assembly 1 and is made of a deformable material being softer than that of both front axle 3 and steering pin 8.

The resilient element 16 partly occupies the groove 14, so as to leave free a portion 17 thereof, which in particular defines a slot for receiving the protrusion 15. The protrusion 15 fits the portion 17 cooperating in contact with the resilient element 16.

The resilient element 16 is deformed once the protrusion 15 is fit in the portion 17. In this way, the friction due to contact between the resilient element 16 and the protrusion 15 causes steering pin 8 to stay firmly coupled to front axle 3.

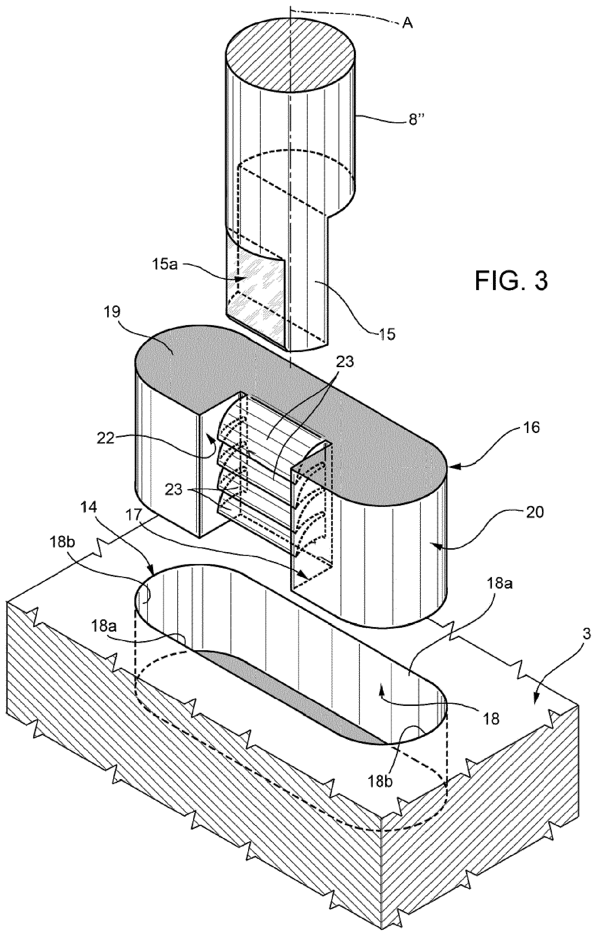

With reference to Figure 3, groove 14 has a shape defined by a plurality of inner walls 18; specifically, inner walls 18 have two planar surfaces 18a facing to each another and two half-cylindrical surfaces 18b with opposite concavities to connect the planar surfaces 18a to each other.

The resilient element 16 comprises a base portion or block 19 having, in particular, a shape that is complementary to that of groove 14. More precisely, block 19 has external faces 20 that cooperate in contact with inner walls 18.

The portion 17 is part of a recess 22, in particular having a prismatic shape, obtained into block 19.

When the protrusion 15 is fit in the portion 17, thus realizing the mechanical shape coupling 13, the same protrusion 15 cooperates on one side with the resilient element 16 and on the other side with inner walls 18, specifically one of the surfaces 18a.

In the embodiment shown, the protrusion 15 has a planar face 15a that cooperates in contact with one of the surfaces 18a.

According to the invention, the resilient element 16 comprises a plurality of teeth 23 being carried by block 19, specifically by a face 20a thereof that, in particular, delimits recess 22; more in particular, face 20a faces one of the planar surfaces 18a.

Teeth 23 extend from block 19 in a cantilever manner within the portion 17. In particular, teeth 23 extend from face 20a toward one of the surfaces 18a. In the embodiment shown, teeth 23 are all aligned according to axis A.

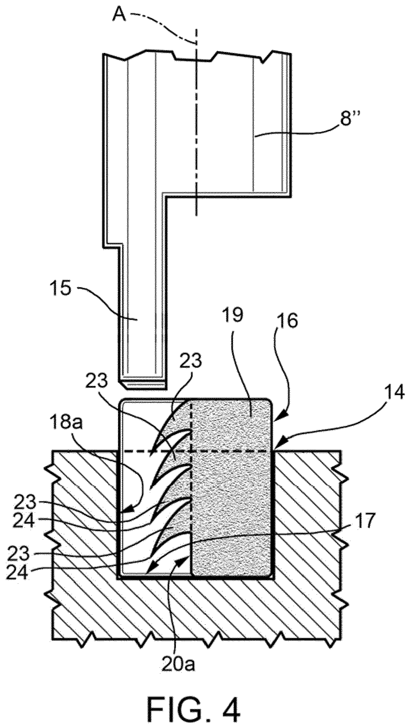

As better shown in Figure 4, the protrusion 15 cooperates with teeth 23 when the mechanical shape coupling 13 is realized.

Each tooth 23 extends from block 19 to a corresponding end 24. In particular, each tooth 23 tapers from block 19 to the end 24.

Figures 3 and 4 show the cross sections of teeth 23 according to a vertical plane, i.e. perpendicular to surfaces 18 for instance. Each cross section is preferably shaped as a shark fin; in other words, the outline of the cross section has an edge belonging to the block 19 and two concave lines that meet in a point, in particular defining the end 24.

The concave lines have the same concavity, namely both facing downwards or toward the bottom of groove 14.

The assembly and working operation of the wheel angle sensor assembly 1 is the following.

The knuckle 2 is mounted definitively on front axle 3 and the steering pin 8 is inserted into hole 9. Block 19 is seated or fit into groove 14. Then, steering pin 8 is rotated about its longitudinal axis so that mechanical coupling 13 allows the coupling with front axle portion 3. In particular, pin 8 is rotated until protrusion 15 can be inserted into portion 17 (Figure 4).

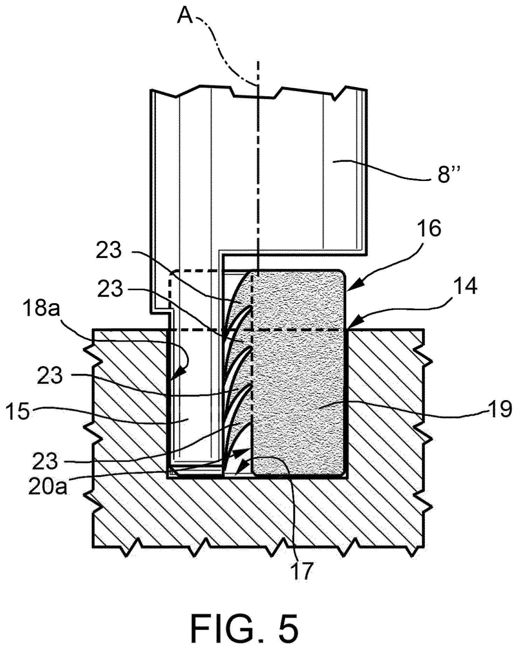

Here, during insertion of the protrusion 15, teeth 23 are bent along axis A, as illustrated in Figure 5.

When such coupling is achieved, then pin 8 is coupled to front axle portion 3 and sensor 7 can be mounted to knuckle 2, i.e. covering hole 9 and so that its protrusion 12 cooperates with slot 11. Accordingly, sensors 7 may measure variation in relative rotation between knuckle 2 with respect to front axle portion 3 with high precision since the phasing between pin 8 and sensor 7 is precisely set.

In view of the foregoing, the advantages of wheel angle sensor assembly 1 according to the invention are apparent.

The use of mechanical shape coupling 13 allows not to use the hand tool and the threaded connection as known in the art, thereby facilitating the mounting of the wheel angle sensor assembly 1, reducing elements and time for mounting this latter.

The resilient element 16 allows avoiding free clearances between the parts forming the mechanical coupling 13; therefore, the latter realizes a stable connection between steering pin 8 and front axle 3 without significant vibrations.

The bending of teeth 23 generates an increased friction with protrusion 15, which guarantees a better stability of the connection.

Furthermore, the shape of teeth 23 renders them more adapted to be bent, such that the insertion of the protrusion 15 is easier and quicker.

Thanks to the deformability of the resilient element 16 and, in particular, the block 19, the machining tolerances for the protrusion 15 and groove 14 may be less strict with a save of cost and a simpler manufacturability of the wheel angle sensor assembly 1.

Moreover, given the shape and the arrangement of the groove 14, the resilient element 16, and the protrusion 15, the connection occurs precisely and without the possibility of error couple the steering pin 8 on the right position with respect to angle sensor 7.

According to the proposed construction arrangement, steering assembly of work vehicles may be produced without the wheel angle sensor assembly 1; indeed, steering assemblies are currently produced with preliminary mounting of a steering pin on the front axle 3, if a wheel angle sensor assembly is required. Therefore, it is possible to mount wheel angle sensor assembly 1 as a later stage simply by inserting pin 8 into hole 9 and coupling the sensor 7 on knuckle 2.

In view of the above, the substitution of wheel angle sensor assembly 1 is more simple, cheap, and quick with respect to known systems. Accordingly, current wheel angle sensor assembly 1 may be sold as a kit and substituted or integrated when necessary into a steering assembly.

In view of the last possibility, the manufacturing line of a steering assembly of a work vehicle comprising the wheel angle sensor assembly 1 according to the invention may be the same of a steering assembly, which is not provided of such device. Indeed, no preliminary operation of mounting a steering pin via threaded elements is required.

It is clear that modifications can be made to the described wheel angle sensor assembly 1 which do not extend beyond the scope of protection defined by the claims.

For example, even if in the present disclosure it has been described only a configuration into which the pin is carried by the front axle, it is clear that the present invention may apply to a mirror configuration into which the pin is carried by the knuckle and the sensor by the front axle.

Moreover, the block 19 may be absent and teeth 23 be carried by inner walls 18; similarly, block 19 may be made of a different material of the one of teeth 23, which would thus define the resilient element 16.

Furthermore, the portion 17 needs not to be arranged between block 19 and inner walls 18; in particular, portion 17 may be formed by an inner recess into block 19.

## Claims

1. A wheel angle sensor assembly (1) for measuring a relative rotation between a front axle (3) of a vehicle with respect to a knuckle (2) to be coupled to a wheel of the vehicle, the wheel angle sensor assembly (1) comprising
- a steering pin (8) configured to be coupled via a mechanical shape coupling (13) with a first member (2, 3) defined by one of the front axle (3) and the knuckle (2),
- an angle sensor (7) configured to be carried and coupled at rotation with a second member (2, 3) defined by the other one of the front axle (3) and the knuckle (2), and
- a resilient element (16) comprising a deformable material being softer than the material of at least one between the steering pin (8) and the first member (2, 3);
wherein one between the steering pin (8) and the first member (2, 3) defines a groove (14) configured for housing said resilient element (16), and
wherein the other between the steering pin (8) and the first member (2, 3) carries a protrusion (15) configured to be housed in said groove (14),
wherein said mechanical shape coupling (13) is realized within the groove (14) by interference between the resilient element (16) and said protrusion (15)
said protrusion (15) being inserted in a portion (17) of the groove (14) left free by the resilient element (16);
the wheel angle sensor is **characterized in that** the resilient element (16) comprises a base portion (19) and at least one tooth portion (23) that extends in a cantilever manner from the base portion (19);
the mechanical shape coupling (13) being realized by the protrusion (15) that cooperates on at least one side with the at least one tooth portion (23).

2. The wheel angle sensor assembly of claim 1, wherein the mechanical shape coupling (13) is further realized by the protrusion (15) that cooperates on another side with a wall (18a) defining the groove (14).

3. The wheel angle sensor assembly of claim 1 or 2, wherein said base portion is a block (19) having a recess (22) that comprises said portion (17) of the groove (14); the at least one tooth portion (23) extending within the recess (22).

4. The wheel angle sensor assembly of any of claims 1 to 3, wherein the at least one tooth portion (23) has an end (24) opposite to the base portion (19) and tapers from the base portion (19) to the end (24).

5. The wheel angle sensor assembly of claim 4, wherein the at least one tooth portion (23) has a cross section shaped as a "shark fin" or having an outline comprising two concave lines distanced at the base portion (19) and tapering to aa single point in said end (24).

6. The wheel angle sensor assembly of any of claims 1 to 5, wherein the at least one tooth portion (23) is arranged to be bent by the protrusion (15) when the mechanical shape coupling (13) is realized.

7. The wheel angle sensor assembly of any of the foregoing claims, wherein the first member (2, 3) is defined by the front axle (3).

8. Steering assembly of a vehicle comprising a front axle (3), a knuckle (2) to be coupled to a wheel of the vehicle, and a wheel sensor assembly according to any of the preceding claims.

9. Work vehicle comprising a steering assembly according to claim 8.

## Patentansprüche

1. Radwinkelsensoranordnung (1) zur Messung einer relativen Drehbewegung zwischen einer Vorderachse (3) eines Fahrzeugs bezüglich eines Achsschenkelgelenks (2), das mit einem Rad des Fahrzeugs gekoppelt wird, wobei die Radwinkelsensoranordnung (1) aufweist:
einen Achsschenkelbolzen (8), der dazu eingerichtet ist, über eine mechanische Formschlussverbindung (13) mit einem ersten Element (2, 3) verbunden zu sein, das durch eines aus der Vorderachse (3) und dem Achsschenkelgelenk (2) definiert ist,
einen Winkelsensor (7), der dazu eingerichtet ist, von einem zweiten Element (2, 3), das durch das andere aus der Vorderachse (3) und dem Achsschenkelgelenk (2) definiert ist, getragen zu werden und mit diesem in Drehverbindung zu sein, und
ein elastisches Element (16), welches ein verformbares Material aufweist, das weicher ist als das Material mindestens eines aus dem Achsschenkelbolzen (8) und dem ersten Element (2, 3);
wobei eines aus dem Achsschenkelbolzen (8) und dem ersten Element (2, 3) eine Nut (14) definiert, die dazu eingerichtet ist, das elastische Element (16) aufzunehmen, und
wobei das andere aus dem Achsschenkelbolzen (8) und dem ersten Element (2, 3) einen Vorsprung (15) aufweist, der dazu eingerichtet ist, in der Nut (14) aufgenommen zu werden,
wobei die mechanische Formschlussverbindung (13) in der Nut (14) durch den Eingriff zwischen dem elastischen Element (16) und dem Vorsprung (15) verwirklicht ist;
wobei der Vorsprung (15) in einen Abschnitt (17) der Nut (14) eingesetzt ist, der von dem elastischen Element (16) freigelassen wird;
wobei der Radwinkelsensor **dadurch gekennzeichnet ist, dass** das elastische Element (16) einen Basisabschnitt (19) und mindestens einen Zahnabschnitt (23), der sich in einer auskragenden Weise von dem Basisabschnitt (19) aus erstreckt, aufweist;
wobei die mechanische Formschlussverbindung (13) durch den Vorsprung (15) verwirklicht wird, der auf mindestens einer Seite mit dem mindestens einen Zahnabschnitt (23) zusammenwirkt.

2. Radwinkelsensoranordnung nach Anspruch 1, wobei die mechanische Formschlussverbindung (13) weiterhin durch den Vorsprung (15) verwirklicht wird, der auf einer anderen Seite mit einer Wand (18a) zusammenwirkt, die die Nut (14) definiert.

3. Radwinkelsensoranordnung nach Anspruch 1 oder 2, wobei der Basisabschnitt ein Klotz (19) mit einer Ausnehmung (22) ist, die den Abschnitt (17) der Nut (14) aufweist, wobei sich der mindestens eine Zahnabschnitt (23) in der Ausnehmung (22) erstreckt.

4. Radwinkelsensoranordnung nach einem der Ansprüche 1 bis 3, wobei der mindestens eine Zahnabschnitt (23) einen Endabschnitt (24) gegenüberliegend dem Basisabschnitt (19) aufweist und sich von dem Basisabschnitt (19) aus zu dem Endabschnitt (24) verjüngt.

5. Radwinkelsensoranordnung nach Anspruch 4, wobei der mindestens eine Zahnabschnitt (23) einen Querschnitt hat, der in Form einer "Haifischflosse" gebildet ist oder eine Kontur hat, die zwei konkave Linien aufweist, die an dem Basisabschnitt (19) beabstandet sind und sich zu einem einzigen Punkt in dem Endabschnitt (24) verjüngen.

6. Radwinkelsensoranordnung nach einem der Ansprüche 1 bis 5, wobei der mindestens eine Zahnabschnitt (23) so angeordnet ist, dass er von dem Vorsprung (15) gebogen wird, wenn die mechanische Formschlussverbindung (13) verwirklicht wird.

7. Radwinkelsensoranordnung nach einem der vorhergehenden Ansprüche, wobei das erste Element (2, 3) durch die Vorderachse (3) definiert ist.

8. Lenkanordnung für ein Fahrzeug, mit einer Vorderachse (3), einem Achsschenkelgelenk (2), das mit einem Rad des Fahrzeugs gekoppelt ist, und einer Radwinkelsensoranordnung nach einem der vorhergehenden Ansprüche.

9. Arbeitsfahrzeug mit einer Lenkanordnung nach Anspruch 8.

## Revendications

1. Ensemble capteur d'angle de roue (1) pour mesurer une rotation relative entre un essieu avant (3) d'un véhicule par rapport à un porte-fusée (2) configuré pour être couplé à une roue du véhicule, l'ensemble capteur d'angle de roue (1) comprenant
- un pivot de direction (8) configuré pour être couplé à l'aide d'un raccord mécanique (13) avec un premier élément (2, 3) défini par ledit essieu avant (3) et ledit porte-fusée (2),
- un capteur d'angle de roue (7) configuré pour être porté et couplé en rotation avec un second élément (2, 3) défini par ledit essieu avant (3) et ledit porte-fusée (2), et
un élément résilient (16) comprenant un matériau déformable qui est plus mou que le matériau d'au moins un élément entre le pivot de direction (8) et le premier élément (2, 3) ;
dans lequel un élément entre le pivot de direction (8) et le premier élément (2, 3) définit une rainure (14) configurée pour loger ledit élément résilient (16), et
dans lequel l'autre élément entre le pivot de direction (8) et le premier élément (2, 3) porte une saillie (15) configurée pour être logée dans ladite rainure (14),
dans lequel ledit raccord mécanique (13) est réalisé à l'intérieur de la rainure (14) par interférence entre l'élément résilient (16) et ladite saillie (15)
ladite saillie (15) étant insérée dans une partie (17) de la rainure (14) laissée libre par l'élément résilient (16) ;
le capteur d'angle de roue est **caractérisé en ce que** l'élément résilient (16) comprend une partie inférieure (19) et au moins une partie dentée (23) qui s'étend en porte-à-faux à partir de la partie inférieure (19) ;
le raccord mécanique (13) étant réalisé par la saillie (15) qui interagit sur au moins un côté avec au moins une partie dentée (23).

2. Ensemble capteur d'angle de roue selon la revendication 1, dans lequel le raccord mécanique (13) est en outre réalisé par la saillie (15) qui interagit d'un autre côté avec une paroi (18a) définissant la rainure (14).

3. Ensemble capteur d'angle de roue selon la revendication 1 ou 2, dans lequel ladite partie inférieure est un bloc (19) comportant un enfoncement (22) qui comprend ladite partie (17) de la rainure (14) ; au moins une partie dentée (23) s'étendant à l'intérieur du renfoncement (22).

4. Ensemble capteur d'angle de roue selon l'une quelconque des revendications 1 à 3, dans lequel au moins une partie dentée (23) a une extrémité (24) opposée à la partie inférieure (19) et se rétrécit de la partie inférieure (19) jusqu'à l'extrémité (24).

5. Ensemble capteur d'angle de roue selon la revendication 4, dans lequel au moins une partie dentée (23) a une section transversale en forme d'« aileron de requin » ou ayant un contour comprenant deux lignes concaves espacées au niveau de la partie inférieure (19) et se rétrécissant en un seul point dans ladite extrémité (24).

6. Ensemble capteur d'angle de roue selon l'une quelconque des revendications 1 à 5, dans lequel au moins une partie dentée (23) est agencée pour être courbée par la saillie (15) lorsque le raccord mécanique (13) est réalisé.

7. Ensemble capteur d'angle de roue selon l'une quelconque des revendications précédentes, dans lequel le premier élément (2, 3) est défini par l'essieu avant (3).

8. Ensemble de direction d'un véhicule comprenant un essieu avant (3), un porte-fusée (2) configuré pour être couplé à une roue du véhicule, et un ensemble capteur de roue selon l'une quelconque des revendications précédentes.

9. Véhicule de chantier comprenant un ensemble de direction selon la revendication 8.
